# EUROPÄISCHE PATENTSCHRIFT

(11) **EP 2 599 089 B1**
(45) Veröffentlichungstag und Bekanntmachung des Hinweises auf die Patenterteilung: **18.07.2018**
(21) Anmeldenummer: 11764493.0
(22) Anmeldetag: 05.09.2011
(51) Int. Cl.: C01B 32/158

(54) **FÜLLSTOFF ZUR STEUERUNG VON ELEKTRISCHEN POTENTIALEN IN TRANSFORMATOREN, GENERATOREN ODER DERGLEICHEN**
FILLER FOR CONTROLLING ELECTRICAL POTENTIALS IN TRANSFORMERS, GENERATORS OR THE LIKE
MATIÈRE DE REMPLISSAGE SERVANT À COMMANDER DES POTENTIELS ÉLECTRIQUES DANS DES TRANSFORMATEURS, GÉNÉRATEURS OU SIMILAIRES

(30) Priorität: 29.09.2010 DE 102010041594
(43) Veröffentlichungstag der Anmeldung: 05.06.2013
(73) Patentinhaber: Siemens Aktiengesellschaft, 80333 München (DE)
(72) Erfinder: KAPITZA, Heinrich, 91334 Hemhofen (DE); SEIDEL, Christian, 90571 Schwaig (DE); ZEININGER, Heinrich, 90587 Obermichelbach (DE)
(86) Internationale Anmeldenummer: PCT/EP2011/065280
(87) Internationale Veröffentlichungsnummer: WO 2012/041648

(56) Entgegenhaltungen:
- WO-A1-00/13191
- US-A- 5 723 920
- DATABASE WPI Week 200757 Thomson Scientific, London, GB; AN 2007-591246 XP002670218, & JP 2007 126578 A (FUJI FILM CO LTD) 24. Mai 2007 (2007-05-24)
- SANDLER J ET AL: "Development of a dispersion process for carbon nanotubes in an epoxy matrix and the resulting electrical properties", POLYMER, ELSEVIER SCIENCE PUBLISHERS B.V, GB, Bd. 40, Nr. 21, 1. Oktober 1999 (1999-10-01), Seiten 5967-5971, XP004171702, ISSN: 0032-3861, DOI: 10.1016/S0032-3861(99)00166-4

## Beschreibung

Die Erfindung betrifft einen Füllstoff zur Steuerung von elektrischen Potentialen in Transformatoren, Generatoren oder dergleichen.

Füllstoffe werden in elektrischen Maschinen, insbesondere Hochspannungsmaschinen wie Motoren, Generatoren und Transformatoren eingesetzt, beispielsweise zur Steuerung eines Potentials oder auch zum Glimmschutz. Ein sogenannter Außenglimmschutz stellt dabei eine Nutisolierung zur elektrischen Leitung gegenüber dem Stator-Blechpaket sicher, wohingegen der sogenannte Endenglimmschutz außerhalb der Nutisolierung angeordnet ist und ebenfalls um die elektrischen Leiter gewickelt ist. Im Falle von Transformatoren wird der Füllstoff um die Transformator-Blechpakete angeordnet und dient zur Steuerung des elektrischen Potentials.

Derartige Füllstoffe sind beispielsweise mit dotiertem Siliziumcarbit, Leitruß oder Graphit versehen, um die erforderliche elektrische Leitfähigkeit zu gewährleisten. Aus der DE 198 39 285 C1 ist bekannt geworden, den Füllstoff mit einem Antimon-dotierten Zinnoxid zu versehen, um die gewünschte elektrische Leitfähigkeit zu erreichen.

Nachteilig dabei ist, dass hohe Füllgrade, beispielsweise zwischen 20 und 60 Gew-% benötigt werden, um die elektrische Leitfähigkeit des Füllstoffes zu gewährleisten. Dadurch verringert sich die mechanische Flexibilität erheblich. Wird der Füllstoff dann an die entsprechenden Stellen im Transformator, Generator etc. eingebracht, kaum dies zu erheblicher Rissbildung im Füllstoff führen, was sich wiederum auf die Leitfähigkeit des Füllstoffs insgesamt negativ auswirkt. Aufgrund des hohen Anteils der zugemischten Stoffe zeigen diese eine hohe Entmischungstendenz, was die Langzeitstabilität des Füllstoffs verschlechtert.

Eine Aufgabe der vorliegenden Erfindung ist es daher, einen Füllstoff bereitzustellen, der kostengünstiger herstellbar ist, eine gezielte Einstellung der gewünschten Leitfähigkeiten ermöglicht, eine verbesserte Langzeitstabilität aufweist sowie eine erhöhte mechanische Belastbarkeit.

Diese Aufgabe wird durch einen Füllstoff zur Steuerung von elektrischen Potentialen in Transformatoren, Generatoren oder dergleichen gelöst, umfassend einen flexiblen Träger, wobei der Träger ein Imprägniermedium gemäß Anspruch 1 aufweist. Diese Aufgabe wird ebenfalls durch ein Verfahren zur Herstellung eines Füllstoffs zur Steuerung von elektrischen Potentialen in Transformatoren, Generatoren oder dergleichen, gemäß einem der Ansprüche 1 bis 7 gelöst, umfassend die Schritte:
Einbringen von zumindest teilweise nanoskaligen, kohlenstoffbasierten Partikeln, insbesondere Kohlenstoffnanoröhren und/oder Kohlenstoffnanofasern, in ein Imprägniermedium, Tränken des flexiblen Trägers mit dem Imprägniermedium, sowie Aushärten des Imprägniermediums.

Der erzielte Vorteil dabei ist, dass damit das gewünschte Leitfähigkeitsniveau einfach zuverlässig eingestellt werden kann, da insbesondere die Einstellung der gewünschten Leitfähigkeit außerhalb des Perkolationsbereichs erfolgen kann. Desgleichen kann der Gewichtsanteil aufgrund der Verwendung der nanoskaligen kohlenstoffbasierten Partikel deutlich gesenkt werden, was eine Reduzierung der Materialkosten für den Füllstoff insgesamt bewirkt. Gleichzeitig wird durch den reduzierten Gewichtsanteil der für die gewünschte Leitfähigkeit nanoskaliger Partikel eine langzeitstabile Mischung des Füllstoffes ausgebildet. Schließlich wird ein robusteres Handling des Füllstoffs bei der Anwendung erreicht, also eine geringere Materialversprödung und eine höhere Abriebbeständigkeit ermöglicht. Ebenso wird auch die Viskosität des Imprägniermediums aufgrund des reduzierten Gewichtsanteils der nanoskaligen kohlenstoffbasierten Partikel weniger beeinflusst, sodass das Imprägniermedium beim Imprägnieren einfacher und zuverlässiger handhabbar ist.

Als Imprägniermedium kann dabei beispielsweise Bisphenol-A-Diglcidylether(HexionEPR162) verwendet werden, in dem ein Anteil von 0,5 Gew-% Mehrwand-Kohlenstoffnanoröhren eingebracht wird. Um eine möglichst homogene Verteilung der Kohlenstoffnanoröhren im Imprägniermedium zu erreichen, kann eine Dispergierung der Kohlenstoffnanoröhren im Imprägniermedium vorgenommen werden. Alternativ kann auch ein 3-Walzenwerk eingesetzt werden. Um eine gewünschte Viskosität des Imprägniermediums sicherzustellen, kann dieses ein zusätzliches Lösungsmittel oder Additiv enthalten. Das Aushärten des Imprägniermediums kann beispielsweise mittels Aminen oder Säureanhydriden erfolgen, insbesondere unter Zusatz von Beschleunigern. Dabei kann beispielsweise dem Imprägniermedium-Kohlenstoffnanoröhren-Gemisch ein tetrafunktioneller Aminhärter, beispielsweise HexionEPH925 mit einem Massenanteil von 14% hinzugefügt und ein flexibler Träger in Form eines Glasgewebes damit imprägniert werden. Es ergibt sich ein resultierender Oberflächenwiderstand von 30kΩ.

Das Tränken des flexiblen Trägers mit dem Imprägniermedium kann beispielsweise derart erfolgen, dass der flexible Träger durch einen Behälter mit dem Imprägniermedium mit definierter Geschwindigkeit gezogen wird, um eine gewünschte Dicke des Imprägniermediums auf dem flexiblen Träger zu gewährleisten. Dem Imprägniermedium kann beispielsweise ein Härter zugegeben werden, um ein ausreichendes Aushärten des Imprägniermediums sicherzustellen. Typische Flächengewichte des flexiblen Trägers in Form eines Bandes reichen von beispielsweise 30 bis zu 200 gr / m². Alternativ kann der flexible Träger auch mit dem Imprägniermedium besprüht werden. Anschließend durchläuft der flexible Träger bei erhöhter Temperatur eine Trocknungsstrecke, die ein Verdampfen des Lösungsmittels und/oder eine Vernetzung des Imprägniermediums mit dem Härter bewirkt.

Weitere Merkmale und Vorteile der Erfindung sind in den Unteransprüchen beschrieben.

Vorteilhafterweise umfassen die Partikel Kohlenstoffnanoröhren und/oder Kohlenstoffnanofasern. Kohlenstoffnanoröhren und/oder Kohlenstoffnanofasern ermöglichen aufgrund ihrer Morphologie und Defektfreiheit ein Einstellen einer gewünschten elektrischen Leitfähigkeit des Füllstoffs über einen sehr weiten Bereich und erhöhen damit dessen Flexibilität.

Zweckmäßigerweise sind die Kohlenstoffnanoröhren als Einwand-Kohlenstoffnanoröhren und/oder Doppelwand-Kohlenstoffnanoröhren und/oder Mehrwand-Kohlenstoffnanoröhren ausgebildet. Der erzielte Vorteil dabei ist, dass beispielsweise Mehrwand-Kohlenstoffnanoröhren deutlich günstiger verfügbar sind, wohingegen Einwand-Kohlenstoffnanoröhren eine noch geringere Dichte aufweisen. Damit kann der Gewichtsanteil im Imprägniermedium noch weiter gesenkt werden.

Vorteilhafterweise beträgt der Gewichtsanteil der Partikel im Imprägniermedium weniger als 5 Gew.-%, insbesondere weniger als 2 Gew-%. Damit wird ein Optimum aus gewünschter Leitfähigkeit und geringem Gewicht sowie Langzeitstabilität von Imprägniermedium und den darin enthaltenen nanoskaligen kohlenstoffbasierten Partikeln sichergestellt.

Zweckmäßigerweise weist der flexible Träger ein Gewebe und/oder ein Fließ, insbesondere hergestellt aus Glas, auf. Damit wird eine einfache und flexible Handhabbarkeit des Füllstoffes erreicht. Zudem kann der flexible Träger einfach und kostengünstig hergestellt werden.

Vorteilhafterweise ist der Füllstoff in Form eines Bandes ausgebildet. Damit kann der Füllstoff kontinuierlich und kostengünstig hergestellt werden.

Zweckmäßigerweise beträgt die Leitfähigkeit des Füllstoffs, insbesondere des Bandes, zwischen 10³ Ωcm und 10¹⁴ Ωcm, vorzugsweise zwischen 10³ Ωcm und 10⁴ Ωcm. Damit wird eine optimale Steuerung von elektrischen Potentialen in Transformatoren, Generatoren oder dergleichen mittels des Füllstoffes sichergestellt.

Weitere Merkmale und Vorteile der Erfindung ergeben sich aus der nachfolgenden Beschreibung eines Ausführungsbeispiels.

Dabei zeigt:
- Fig. 1: Schritte eines Verfahrens zur Herstellung eines Füllstoffs gemäß einer ersten Ausführungsform der vorliegenden Erfindung;
- Fig. 2: schematisch in einer Seitenansicht einen Aufbau eines Füllstoffs gemäß einer ersten Ausführungsform.

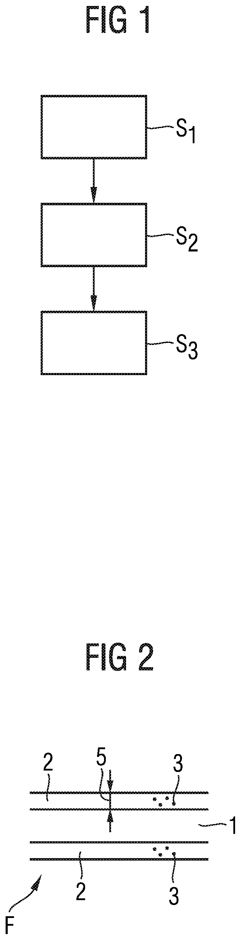

In Fig. 1 bezeichnet Bezugszeichen S₁ den Schritt des Einbringens von zumindest teilweise nanoskaligen, kohlenstoffbasierten Partikeln, insbesondere Kohlenstoffnanoröhren und/oder Kohlenstoffnanofasern in ein Imprägniermedium, wobei der Gewichtsanteil der Partikel im Imprägniermedium weniger als 5 Gew-% beträgt. Anschließend wird in einem weiteren Schritt S₂ der flexible Träger mit dem Imprägniermedium getränkt und in einem letzten Schritt S₃ das Imprägniermedium ausgehärtet.

In Fig. 2 bezeichnet Bezugszeichen 1 einen flexiblen Träger, beispielsweise ein Gewebeband. Das Gewebeband 1 weist nach dem Tränken des Gewebebandes 1 mit dem Imprägniermedium 2 in der in Fig. 2 dargestellten Seitenansicht auf jeweils der oberen und unteren Seite des Trägers 1 das ausgehärtete Imprägniermedium 2 mit einer gewissen Dicke 5 auf. Diese ist abhängig von Parametern des Tränkvorgangs, beispielsweise der Verweildauer des Trägers 1 in einem Tränkbad mit dem Imprägniermedium 2. Das Imprägniermedium 2 enthält nanoskalige, kohlenstoffbasierte Partikel 3. Das Imprägniermedium 2 besteht in Fig. 2 aus Epoxidharz mit einer Dichte von ca. 1,1 g / cm³. Da die Kohlenstoffnanoröhren eine Dichte im Bereich zwischen 1,3 und 1,4 g / cm³ aufweisen, ist das Imprägniermedium 2 im Wesentlichen homogen und ermöglicht so eine sehr langzeitstabile Dispersion der Kohlenstoffnanoröhren im Epoxidharz.

## Patentansprüche

1. Füllstoff (F) zur Steuerung von elektrischen Potentialen in Transformatoren, Generatoren oder dergleichen, umfassend einen flexiblen Träger (1), wobei der Träger (1) ein Imprägniermedium (2) aufweist und das Imprägniermedium (2) zumindest teilweise nanoskalige, kohlenstoffbasierte Partikel (3) und einen Aminhärter enhält, wobei die Partikel (3) Kohlenstoffnanoröhren und/odet Kohlenstoffnanofasern umfassen und wobei der flexible Träger (1) ein Gewebe und/odor ein Flies aufweist.

2. Füllstoff gemäß Anspruch 1, wobei
die Kohlenstoffnanoröhren aJs Einwand-Kohlenstoffnanoröhren und/oder Doppelwand-Nanoröhren und/oder Mehrwand-Kohlenstoffnanoröhren ausgebildet sind.

3. Füllstoff gemäß zumindest einem der Ansprüche 1-2, wobei ein Gewichtsanteil der Partikel (3) im Imprägniermedium (2) weniger als 5%, insbesondere weniger als 1,0% beträgt.

4. Füllstoff gemäß zumindest einem der Ansprüche 1-3, wobei der flexible Träger (1) aus Glas hergestellt ist.

5. Füllstoff gemäß zumindest einem der Anspruche 1-4, wobei der Füllstoff (F) in Form eines Bandes ausgebildet ist.

6. Füllstoff gemäß zumindest einem der Ansprüche 1-5, wobei eine Leitfähigkeit des Füllstoffs (F) zwischen 10³ Ohm cm und 10¹⁴ Ohm cm, vorzugsweise zwischen 10³ Ohm cm und 10⁴ Ohm cm, beträgt.

7. Verfahren zur Herstellung eines Füllstoffes (F) zur Steuerung von elektrischen Potentialen in Transformatoren, Generatoren oder dergleichen, gemäß zumindest einem der Ansprüche 1-6, umfassend die Schritte:
Einbringen (S₁) von zumindest teilweise nanoskaligen, kohlenstoffbasierten Partikeln (3) auf Basis von Kohlenstoffnanoröhren und/oder Knhlenstoffnanofasern in ein Imprägniermedium, wobei der Gewichtsanteil der Partikel (3) in dem Imprägniermedium (2) weniger als 5 % beträgt,
Tränken (S₂) des flexiblen Trägers mit dem Imprägniermedium (2), sowie Aushärten (S₃) des Imprägniermediums (2).

8. Verwendung eines Füllstoffes (F) gemäß einem der Ansprüche 1-6 zur Steuerung von elektrischen Potentialen in Transformatoren und/oder Generatoren und/oder Elektromotoren.

## Claims

1. Filler (F) for control of electrical potentials in transformers, generators or the like, comprising a flexible carrier (1), wherein the carrier (1) includes an impregnation medium (2) and the impregnation medium (2) comprises at least partly nanoscale, carbon-based particles (3) and an amine hardener, wherein the particles (3) comprise carbon nanotubes and/or carbon nanofibres, and wherein the flexible carrier (1) comprises a weave and/or a nonwoven.

2. Filler according to Claim 1, wherein the carbon nanotubes take the form of single-wall carbon nanotubes and/or double-wall nanotubes and/or multiwall carbon nanotubes.

3. Filler according to at least one of Claims 1-2, wherein a proportion by weight of the particles (3) in the impregnation medium (2) is less than 5%, especially less than 1.0%.

4. Filler according to at least one of Claims 1-3, wherein the flexible carrier (1) has been produced from glass.

5. Filler according to at least one of Claims 1-4, wherein the filler (F) takes the form of a tape.

6. Filler according to at least one of the Claims 1-5, wherein a conductivity of the filler (F) is between 10³ ohm cm and 10¹⁴ ohm cm, preferably between 10³ ohm cm and 10⁴ ohm cm.

7. Process for producing a filler (F) for control of electrical potentials in transformers, generators or the like according to at least one of Claims 1-6, comprising the steps of:
introducing (S₁) at least partly nanoscale, carbon-based particles (3) based on carbon nanotubes and/or carbon nanofibres into an impregnation medium, where the proportion by weight of the particles (3) in the impregnation medium (2) is less than 5%,
impregnating (S₂) the flexible carrier with the impregnation medium (2), and curing (S₃) the impregnation medium (2).

8. Use of a filler (F) according to any of Claims 1-6 for control of electrical potentials in transformers and/or generators and/or electric motors.

## Revendications

1. Matière de remplissage (F) pour la commande de potentiels électriques dans des transformateurs, des générateurs ou analogues, comportant un support souple (1), dans laquelle le support (1) comprend un milieu d'imprégnation (2) et le milieu d'imprégnation (2) contient des particules (3) à base de carbone au moins en partie nanométriques et un durcisseur amine, dans laquelle les particules (3) comportent des nanotubes de carbone et/ou des nanofibres de carbone et dans laquelle le support souple (1) comprend un tissu et/ou un voile.

2. Matière de remplissage selon la revendication 1, dans laquelle les nanotubes de carbone se présentent sous la forme de nanotubes de carbone à simple paroi et/ou de nanotubes à double paroi et/ou de nanotubes de carbone à multiples parois.

3. Matière de remplissage selon au moins l'une des revendications 1 à 2, dans laquelle une proportion en poids des particules (3) dans le milieu d'imprégnation (2) s'élève à moins de 5 %, en particulier moins de 1,0 %.

4. Matière de remplissage selon au moins l'une des revendications 1 à 3, dans laquelle le support souple (1) est produit à partir de verre.

5. Matière de remplissage selon au moins l'une des revendications 1 à 4, la matière de remplissage (F) se présentant sous la forme d'une bande.

6. Matière de remplissage selon au moins l'une des revendications 1 à 5, dans laquelle une conductivité de la matière de remplissage (F) est comprise entre 10³ Ohm cm et 10¹⁴ Ohm cm, de préférence entre 10³ Ohm cm et 10⁴ Ohm cm.

7. Procédé pour la production d'une matière de remplissage (F) pour la commande de potentiels électriques dans des transformateurs, des générateurs ou analogues, selon au moins l'une des revendications 1 à 6, comportant les étapes suivantes :
introduction (S₁) de particules (3) à base de carbone au moins en partie nanométriques, à base de nanotubes de carbone et/ou de nanofibres de carbone dans un milieu d'imprégnation, dans lequel la proportion en poids des particules (3) dans le milieu d'imprégnation (2) s'élève à moins de 5 %,
imbibition (S₂) du support souple avec le milieu d'imprégnation (2), ainsi que durcissement (S₃) du milieu d'imprégnation (2).

8. Utilisation d'une matière de remplissage (F) selon l'une des revendications 1 à 6 pour la commande de potentiels électriques dans des transformateurs et/ou des générateurs et/ou des moteurs électriques.
